# EUROPÄISCHE PATENTANMELDUNG

(11) **EP 2 135 803 A1**
(43) Veröffentlichungstag der Anmeldung: **23.12.2009**
(21) Anmeldenummer: 09006042.7
(22) Anmeldetag: 02.05.2009
(51) Int. Cl.: B62J 15/02

(54) **Radschützer für ein Fahrrad**

(30) Priorität: 18.06.2008 DE 102008028972
(71) Anmelder: sks metaplast Scheffer-Klute GmbH, 59846 Sundern (DE)
(72) Erfinder: Grabski, Karsten, 58739 Wickede/Ruhr (DE); Krick, Peter, 59872 Meschede (DE); Kordes, Sven, 59846 Sundern (DE)
(74) Vertreter: Basfeld, Rainer

(57) **Zusammenfassung**

Radschützer für ein Fahrrad, umfassend mindestens ein Spritzschutzteil (1, 2) sowie Adaptermittel, über die das mindestens eine Spritzschutzteil (1, 2) an dem Fahrrad befestigt werden kann, wobei die Adaptermittel lösbar mit dem mindestens einen Spritzschutzteil (1, 2) verbunden werden können, wobei die Adaptermittel ein Befestigungselement und ein Verriegelungsteil (22) umfassen und wobei durch eine Linearbewegung des Verriegelungsteils (22) relativ zu dem Befestigungselement die Adaptermittel mit dem mindestens einen Spritzschutzteil (1, 2) verbunden werden können.

## Beschreibung

Die vorliegende Erfindung betrifft einen Radschützer für ein Fahrrad gemäß dem Oberbegriff des Anspruchs 1.

Ein Radschützer der vorgenannten Art ist aus der EP 1 795 441 A1 bekannt. Der darin beschriebene Radschützer weist Adaptermittel auf, die über in einem Gabelrohr aufspreizbare Klemmmittel an dem Fahrrad befestigt werden können. Die Adaptermittel sind über eine Verbindung, die einem Bajonettverschluss ähnelt, an dem Spritzschutzteil festlegbar. Dabei ist an dem Spritzschutzteil eine vergleichsweise komplizierte Struktur ausgebildet.

Die Klemmmittel umfassen ein Spreizelement, das eine Mehrzahl von Spreizarmen aufweist, die von einem konischen Teil auseinander gedrückt werden können. Derartige Klemmmittel bieten unter Umständen keinen ausreichenden Halt.

Ein weiterer Radschützer ist aus der EP 1 435 323 A1 bekannt. Der darin beschriebene Radschützer kann ebenfalls mittels Adaptermitteln an der Vorderradgabel angebracht werden, die vergleichbare Klemmmittel aufweisen. An dem Spritzschutzteil ist eine Schiene ausgebildet, in die ein von den Adaptermitteln umfasstes Schiebeteil eingeschoben werden kann. Für die lösbare Festlegung in einer Endlage der Schiebebewegung sind über eine Taste verschwenkbare Rastmittel vorgesehen. Auch bei diesem Stand der Technik sind die Adaptermittel daher vergleichsweise kompliziert gestaltet.

Das der vorliegenden Erfindung zugrunde liegende Problem ist die Schaffung eines Radschützers der eingangs genannten Art, der einfacher aufgebaut ist und/oder sicher an dem Fahrrad gehaltert werden kann.

Dies wird durch einen Radschützer der eingangs genannten Art mit den kennzeichnenden Merkmalen des Anspruchs 1 oder des Anspruchs 10 gelöst. Die Unteransprüche betreffen bevorzugte Ausgestaltungen der Erfindung.

Gemäß Anspruch 1 ist vorgesehen, dass die Adaptermittel ein Befestigungselement und ein Verriegelungsteil umfassen, wobei durch eine Linearbewegung des Verriegelungsteils relativ zu dem Befestigungselement die Adaptermittel mit dem mindestens einen Spritzschutzteil verbunden werden können. Im Gegensatz zum Stand der Technik muss keine Drehbewegung kompliziert aufgebauter Teile zueinander erfolgen. Vielmehr kann das mindestens eine Spritzschutzteil einfach aufgebaut sein, weil lediglich ein Verriegelungsteil linear verschoben werden muss.

Es besteht die Möglichkeit, dass das Verriegelungsteil ein Schlüsselloch umfasst, durch das das Befestigungselement teilweise hindurch ragen kann. Dabei kann das Befestigungselement einen Kopf aufweisen, der einen größeren Radius als der schmale Bereich des Schlüssellochs und einen kleineren Radius als der breite Bereich des Schlüssellochs aufweist. Eine derartige Gestaltung lässt sich einfach realisieren und kann trotzdem eine wirkungsvolle Befestigung des mindestens einen Spritzschutzteils an den Adaptermitteln gewährleisten.

Gemäß Anspruch 10 ist vorgesehen, dass die Adaptermittel zwei ineinander drückbare Spreizelemente umfassen, die beide aufspreizbar sind. Aufgrund der Tatsache, dass im Gegensatz zum Stand der Technik zwei Spreizelemente aufgespreizt werden, ergibt sich eine größere Anlagefläche an der Innenseite des Gabelrohres. Diese verbessert den Halt der Adaptermittel.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Detailexplosionsansicht einer ersten Ausführungsform eines erfindungsgemäßen Radschützers;
- Fig. 2: eine teilweise geschnittene Seitenansicht der Ausführungsform gemäß Fig. 1;
- Fig. 3: eine Schnittansicht gemäß den Pfeilen III - III in Fig. 2;
- Fig. 4: eine Detailansicht gemäß dem Pfeil IV in Fig. 2;
- Fig. 5: eine Untenansicht gemäß dem Pfeil V in Fig. 2;
- Fig. 6: eine Detailexplosionsansicht einer zweiten Ausführungsform eines erfindungsgemäßen Radschützers;
- Fig. 7: eine Fig. 4 entsprechende Detailansicht der zweiten Ausführungsform eines erfindungsgemäßen Radschützers.

In den Figuren sind gleiche oder funktional gleiche Teile mit gleichen Bezugszeichen versehen.

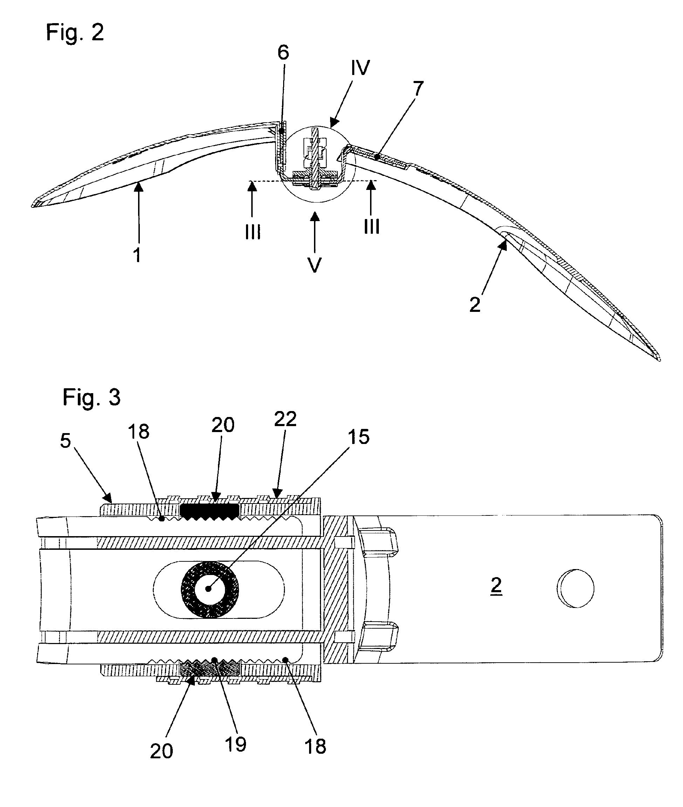

Aus Fig. 2 ist ersichtlich, dass ein erfindungsgemäßer Radschützer ein erstes, im Gebrauchszustand vorderes Spritzschutzteil 1 und ein zweites, im Gebrauchszustand hinteres Spritzschutzteil 2 sowie nicht mit Bezugszeichen versehene Verbindungsmittel und Adaptermittel umfasst. Mit Hilfe der Verbindungsmittel können die beiden Spritzschutzteile 1, 2 miteinander verbunden werden. Die Adaptermittel dienen dazu, den Radschützer an einer Vorderradgabel eines Fahrrades zu befestigen.

Fig. 2 lässt sich entnehmen, dass der Radschützer in Gebrauchsstellung in Seitenansicht einen stufenförmigen Versatz zwischen dem ersten und dem zweiten Spritzschutzteil 1, 2 aufweist.

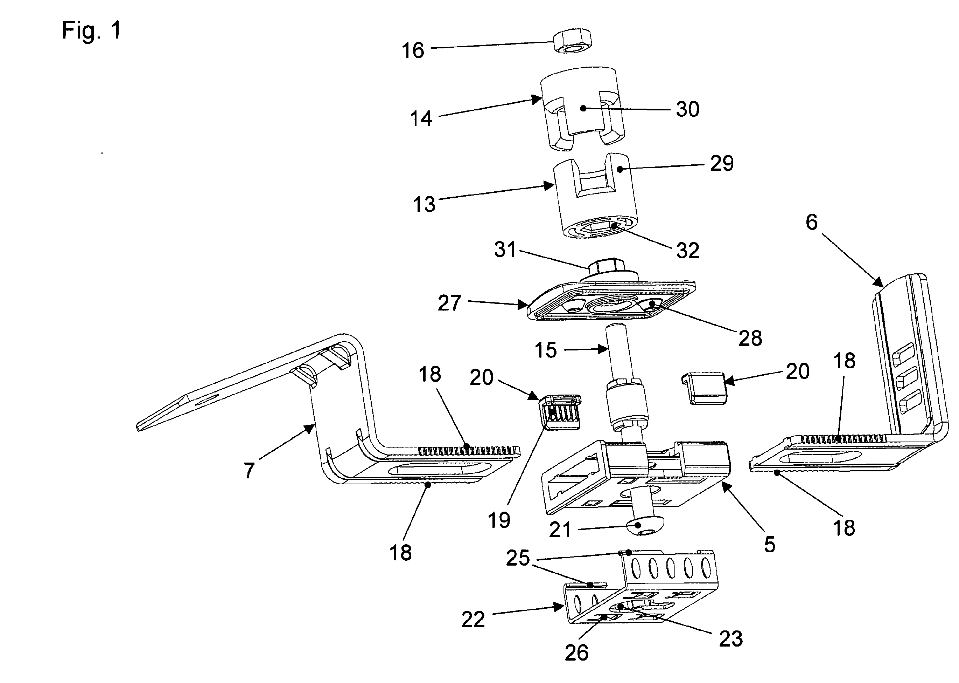

Die Verbindungsmittel umfassen ein erstes Verbindungsteil 5, ein erstes Befestigungselement 6 und ein zweites Befestigungselement 7, wobei die Befestigungselemente 6, 7 als ein- beziehungsweise zweimal abgewinkelte stegförmige Teile, wie beispielsweise Bleche ausgebildet sind. Das erste Verbindungsteil 5 ähnelt einer flachen beidseitig offenen Hülse, die auf jeder ihrer Stirnseiten jeweils eine Aufnahme aufweist (siehe Fig. 1). Die in Gebrauchsstellung einander zugewandten Enden der Befestigungselemente 6, 7 können in die Aufnahmen des ersten Verbindungsteils 5 soweit eingeschoben werden, dass sie einander überlappen. Durch das Ausmaß der Überlappung der Befestigungsteile 6, 7 in dem ersten Verbindungsteil 5 kann der Abstand der Spritzschutzteile 1, 2 voneinander in Längsrichtung des Fahrrades vorgegeben werden.

Die äußeren Ränder der in das erste Verbindungsteil 5 einbringbaren Abschnitte der Befestigungsteile 6, 7 sind mit einer Außenverzahnung 18 versehen. In diese Außenverzahnungen 18 können die Verzahnungen 19 zweier Arretierungsteile 20 eingreifen, die die beiden Befestigungselemente 6, 7 aneinander und/oder an dem ersten Verbindungsteil 5 festlegen können, um damit den Radschützer gegen Verstellung zu sichern.

Die in Gebrauchsstellung voneinander abgewandten Enden der Befestigungselemente 6, 7 sind mit dem ersten Spritzschutzteil 1 beziehungsweise dem zweiten Spritzschutzteil 2 verbunden.

Dabei ist die Verbindung zwischen dem ersten Befestigungselement 6 und dem ersten Spritzschutzteil 1 höhenverstellbar beziehungsweise erstreckt sich in Gebrauchsstellung in vertikaler Richtung. Dies wird dadurch realisiert, dass das erste Spritzschutzteil 1 eine sich in Gebrauchsstellung in vertikaler Richtung erstreckende Aufnahme aufweist, in die das entsprechende Ende des ersten Befestigungsteils 6 mehr oder weniger weit eingeschoben werden kann. Die Festlegung des Endes des ersten Befestigungsteils 6 in der gewünschten Position kann durch eine Rastzunge gewährleistet werden. Die Höhenverstellung zwischen erstem Befestigungselement 6 und erstem Spritzschutzteil 1 gewährleistet eine Höhenverstellung zwischen erstem und zweitem Spritzschutzteil 1, 2.

Die Verbindung zwischen dem zweiten Befestigungselement 7 und dem zweiten Spritzschutzteil 2 ist in dem abgebildeten Ausführungsbeispiel nicht höhenverstellbar. Es besteht aber durchaus auch die Möglichkeit, auch diese Verbindung höhenverstellbar auszubilden. Das zweite Spritzschutzteil 2 weist bei dem abgebildeten Ausführungsbeispiel eine sich in Gebrauchsstellung in horizontaler Richtung erstreckende Ausnehmung auf, in die das entsprechende Ende des zweiten Befestigungselements 7 eingebracht und per Kraft- oder Formschluss festgelegt werden kann.

Es besteht durchaus die Möglichkeit, die beiden Spritzschutzteile 1, 2 nicht verstellbar zueinander auszuführen. Weiterhin besteht die Möglichkeit, die beiden Spritzschutzteile 1, 2 als ein einstückiges Teil auszubilden. In diesem Fall kann auch auf das erste Verbindungsteil 5 verzichtet werden.

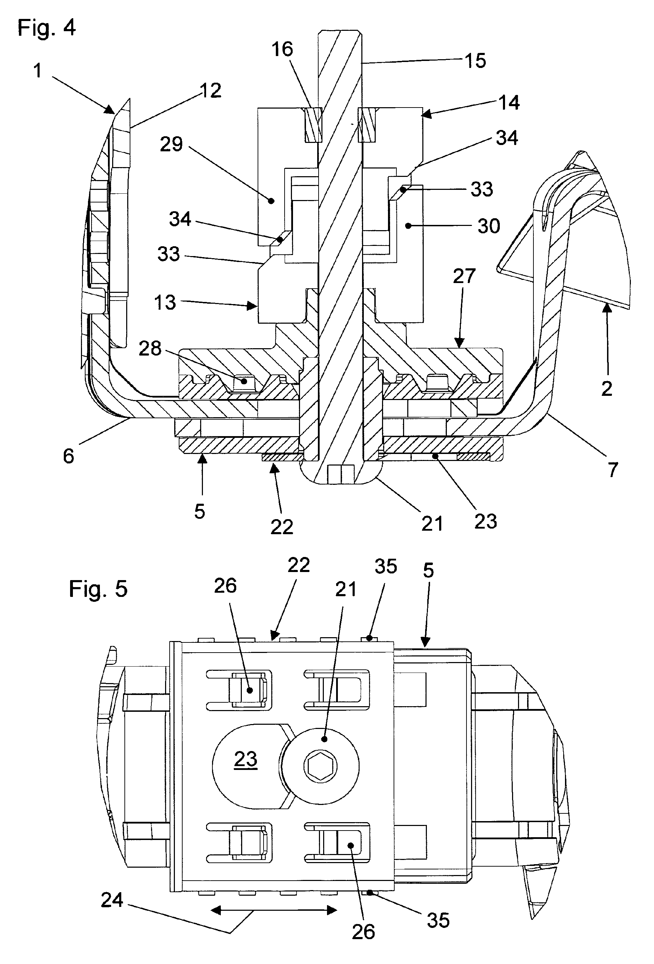

Das in Gebrauchsstellung vordere beziehungsweise erste Spritzschutzteil 1 des Radschützers weist auf seiner dem zweiten Spritzschutzteil 2 zugewandten Seite einen vertikalen Abschnitt 12 auf (siehe Fig. 4). Dieser vertikale Abschnitt 12 kann in an sich bekannter Weise (siehe EP 1 435 323 A2) bei eingefederter Vorderradgabel zwischen der Vorderradgabel oder einem an dieser angeordneten Gabelkopf und einer Gabelbrücke angeordnet sein.

Die Adaptermittel verfügen über Klemmmittel, die in das Innere einer Vorderradgabel eingebracht und aufgespreizt werden können. Im abgebildeten Ausführungsbeispiel sind zwei ineinander greifende Spreizelemente 13, 14 vorgesehen, die konische Flächen 33, 34 aufweisen, die bei einem Ineinander-Drücken der Spreizelemente 13, 14 ein Aufspreizen bewirken (siehe Fig. 4). Dabei sind beide Spreizelemente 13, 14 aufspreizbar und weisen jeweils drei Spreizarme 29, 30 auf. Die Spreizarme 29 des ersten Spreizelements 13 sind in Gebrauchsstellung in Umfangsrichtung versetzt zu den Spreizarmen 30 des zweiten Spreizelements 14 angeordnet, so dass die Spreizelemente 13, 14 ineinander greifen können. Durch das Aufspreizen beider Spreizelemente 13, 14 ergibt sich eine größere Anlagefläche und damit ein besserer Halt im Innern eines Gabelrohrs.

Die Adaptermittel umfassen weiterhin eine als Befestigungselement dienende Schraube 15, die zusammen mit einer Mutter 16 die Spreizelemente 13, 14 zusammendrücken kann. Dabei ist die Schraube 15 so gestaltet, dass sie durch das erste Verbindungsteil 5 hindurch ragen kann. An diesem Ende weist die Schraube 15 einen sich radial nach außen erstreckenden Kopf 21 auf. Weiterhin ist ein Verriegelungsteil 22 vorgesehen, das ein Schlüsselloch 23 aufweist. Das Verriegelungsteil 22 ist auf der in Gebrauchsstellung unteren Seite des ersten Verbindungsteils 5 angeordnet und in Längsrichtung des Radschützers beziehungsweise in Richtung des Pfeiles 24 in Fig. 5 verschiebbar. Das Verriegelungsteil 22 ist beispielsweise als C-förmiges Blech ausgebildet, dessen C-Schenkel 25 um das erste Verbindungsteil 5 teilweise herumgreifen. Auf der dem ersten Verbindungsteil 5 zugewandten Seite weist das Verriegelungsteil 22 vier Rastzungen 26 auf, die in der Verriegelungsstellung in entsprechende Ausnehmungen auf der dem Verriegelungsteil 22 zugewandten Außenseite des Verbindungsteils 5 eingreifen können. Es besteht die Möglichkeit, lediglich eine oder zwei Rastzungen 26 vorzusehen, oder auf Rastzungen 26 zu verzichten.

Auf seinen Außenseiten weist das Verriegelungsteil 22 Riffelungen 35 auf, die die Griffigkeit für den Benutzer verbessern. Allerdings besteht die Möglichkeit, dass beispielsweise durch das Schlüsselloch 23 Schmutzpartikel zwischen die aneinander gleitenden Flächen von Verriegelungsteil 22 und Verbindungsteil 5 gelangen können.

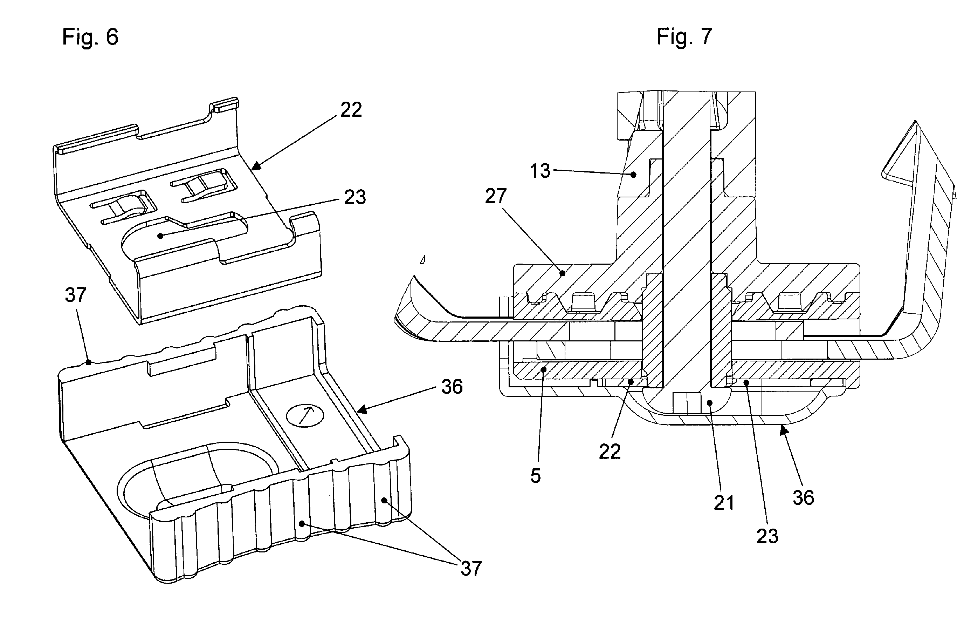

Daher weist die in Fig. 6 und Fig. 7 abgebildete Ausführungsform eine zusätzliche Schutzkappe 36 auf, an deren Außenseite Riffelungen 37 angeordnet sind. Die Schutzkappe 36 entspricht hinsichtlich seiner Form im Wesentlichen dem Verriegelungsteil 22 und umgreift dieses dabei derart, dass auch der Kopf 21 der Schraube 15 und das Schlüsselloch 23 verdeckt sind. Dadurch wird das Eindringen von Schmutz verhindert. Weiterhin kann die Schutzkappe 36 aus Kunststoff bestehen, so dass die Griffigkeit weiter erhöht werden kann. Bei der Ausführungsform gemäß den Fig. 6 und Fig. 7 kann auf die Riffelungen 35 an dem Verriegelungsteil 22 verzichtet werden.

Die Adaptermittel umfassen weiterhin ein zweites Verbindungsteil 27, das zwei dem ersten Verbindungsteil 5 zugewandte Vorsprünge 28 aufweist, die in entsprechende Ausnehmungen des ersten Verbindungsteils 5 eingreifen können. Das zweite Verbindungsteil 27 kann somit als Widerlager auf der Oberseite des ersten Verbindungsteils 5 dienen. Durch das zweite Verbindungsteil 27 hindurch kann sich die Schraube 15 erstrecken (siehe Fig. 1 und Fig. 4). Auf der in Gebrauchsstellung oberen Seite des zweiten Verbindungsteils 27 ist eine Sechskantanformung 31 vorgesehen, die in eine entsprechende Sechskantausnehmung 32 des ersten Spreizelements 13 eingreifen kann, um eine drehfeste Verbindung zwischen dem zweiten Verbindungsteils 27 dem ersten Spreizelement 13 zu erzielen (siehe Fig. 1 und Fig. 4).

Zur Verbindung der Adaptermittel mit dem ersten Verbindungsteil 5 wird das erste Verbindungsteil 5 so von unten auf die Schraube 15 aufgeschoben, dass der Kopf 21 der Schraube 15 nach unten durch das erste Verbindungsteil 5 und das darunter angeordnete Verriegelungsteil 22 hindurch greift. In diesem Zustand greifen die Vorsprünge 27 in die Ausnehmungen des ersten Verbindungsteils 5 ein. Daran anschließend wird das Verriegelungsteil 22 so in Richtung des Pfeiles 24 nach links in Fig. 5 verschoben, dass der Schaft der Schraube 15 durch den schmaleren Teil des Schlüssellochs 23 hindurch ragt. Gleichzeitig rasten die Rastzungen 26 in die entsprechenden Ausnehmungen ein. Damit sind die Schraube 15 und damit die Adaptermittel an dem ersten Verbindungsteil 5 festgelegt. Eine Verschiebung des Verriegelungsteils 22 in die entgegengesetzte Richtung löst die Verbindung zwischen der Schraube 15 beziehungsweise den Adaptermitteln 4 und dem ersten Verbindungsteil 5 in ebenso einfacher Weise.

Die Adaptermittel können auch dann an der Vorderradgabel verbleiben, wenn das erste und das zweite Spritzschutzteil 1, 2 sowie die Verbindungsmittel 3 von dem Benutzer abgenommen werden. Die Einheit aus erstem Spritzschutzteil 1, zweitem Spritzschutzteil 2 und Verbindungsmitteln 3 kann von dem Benutzer oder auch vom Hersteller werksseitig an die Geometrie des entsprechenden Fahrrades angepasst und vormontiert werden. Dabei dienen zur Anpassung an die Geometrie des Fahrrades die Höhenverstellbarkeit der Verbindung zwischen erstem Spritzschutzteil 1 und erstem Befestigungselement 6 sowie die Verstellbarkeit in horizontaler Richtung zwischen erstem und zweitem Spritzschutzteil 1, 2 über das Ausmaß der Überlappung zwischen erstem und zweitem Befestigungselement 6, 7 in dem ersten Verbindungsteil 5. Die an die Geometrie des Fahrrades angepasste Einheit aus erstem Spritzschutzteil 1, zweitem Spritzschutzteil 2 und Verbindungsmitteln 3 kann insbesondere durch die Arretierungsteile 20 gegen eine unbeabsichtigte Verstellung gesichert werden.

Nach Lösen der Arretierungsteile 20 kann der Radschützer jederzeit wieder an die Geometrie einer anderen Vorderradgabel angepasst werden.

Die Adaptermittel, insbesondere die Schraube 15 mit Kopf 21 und das Verriegelungsteil 22 mit Schlüsselloch 23 können auch mit nicht verstellbaren Radschützern kombiniert werden, wie sie beispielsweise aus der EP 1 435 323 A1 bekannt sind. Beispielsweise kann bei einem einstückigen Spritzschutzteil in einem mittleren Bereich lediglich eine Bohrung vorgesehen sein, durch die sich die Schraube 15 hindurch erstrecken kann. Weiterhin kann dabei das Verriegelungsteil 22 verschiebbar an dem mittleren Bereich des Spritzschutzteils gehaltert sein.

Das verschiebbare Verriegelungsteil 22 mit dem Schlüsselloch 23 gewährleistet eine schnelle und sichere Verbindung zwischen den Adaptermitteln und dem Spritzschutzteil des Radschützers, das im Stand der Technik einstückig ist und bei dem in den Figuren abgebildeten Ausführungsbeispiel aus zwei verbundenen Spritzschutzteilen 1, 2 besteht.

## Patentansprüche

1. Radschützer für ein Fahrrad, umfassend
- mindestens ein Spritzschutzteil (1, 2),
- Adaptermittel, über die das mindestens eine Spritzschutzteil (1, 2) an dem Fahrrad befestigt werden kann, wobei die Adaptermittel lösbar mit dem mindestens einen Spritzschutzteil (1, 2) verbunden werden können,
**dadurch gekennzeichnet, dass**
- die Adaptermittel ein Befestigungselement und ein Verriegelungsteil (22) umfassen, wobei durch eine Linearbewegung des Verriegelungsteils (22) relativ zu dem Befestigungselement die Adaptermittel mit dem mindestens einen Spritzschutzteil (1, 2) verbunden werden können.

2. Radschützer nach Anspruch 1, **dadurch gekennzeichnet, dass** das Verriegelungsteil (22) ein Schlüsselloch (23) umfasst, durch das das Befestigungselement teilweise hindurch ragen kann.

3. Radschützer nach Anspruch 2, **dadurch gekennzeichnet, dass** das Befestigungselement einen Kopf (21) aufweist, der einen größeren Radius als der schmale Bereich des Schlüssellochs (23) und einen kleineren Radius als der breite Bereich des Schlüssellochs (23) aufweist.

4. Radschützer nach einem der Ansprüche 1 bis 3, **dadurch gekennzeichnet, dass** der Radschützer ein erstes Verbindungsteil (5) umfasst, durch das sich das Befestigungselement hindurch erstrecken kann.

5. Radschützer nach einem der Ansprüche 1 bis 4, **dadurch gekennzeichnet, dass** die Adaptermittel ein zweites Verbindungsteil (27) umfassen, durch das sich das Befestigungselement hindurch erstrecken kann.

6. Radschützer nach Anspruch 5, **dadurch gekennzeichnet, dass** das zweite Verbindungsteil (27) mindestens einen Vorsprung (28) aufweist, der im miteinander verbundenen Zustand von mindestens einem Spritzschutzteil (1, 2) und Adaptermitteln in mindestens eine dafür vorgesehene Ausnehmung eingreift.

7. Radschützer nach einem der Ansprüche 4 bis 6, **dadurch gekennzeichnet, dass** das Verriegelungsteil (22) verschiebbar an dem ersten Verbindungsteil (5) gehaltert ist.

8. Radschützer nach einem der Ansprüche 1 oder 7, **dadurch gekennzeichnet, dass** die Adaptermittel Klemmmittel umfassen, die klemmend in dem Gabelrohr des Fahrrads befestigt werden können.

9. Radschützer nach einem der Ansprüche 1 bis 8, **dadurch gekennzeichnet, dass** die Adaptermittel derart ausgebildet sind, das nach Lösen der Verbindung zwischen den Adaptermitteln und dem mindesten einen Spritzschutzteil (1, 2) die Adaptermittel an dem Fahrrad verbleiben können.

10. Radschützer nach einem der Ansprüche 1 bis 9 oder nach dem Oberbegriff des Anspruchs 1, **dadurch gekennzeichnet, dass** die Adaptermittel zwei ineinander drückbare Spreizelemente (13, 14) umfassen, die beide aufspreizbar sind.

11. Radschützer nach Anspruch 10, **dadurch gekennzeichnet, dass** jedes der Spreizelemente (13, 14) eine Mehrzahl von Spreizarmen (29, 30) aufweist.

12. Radschützer nach Anspruch 11, **dadurch gekennzeichnet, dass** die Spreizarme (29) des ersten Spreizelements (13) in Gebrauchsstellung in Umfangsrichtung versetzt zu den Spreizarmen (30) des zweiten Spreizelements (14) angeordnet sind, so dass die Spreizelemente (13, 14) ineinander greifen können.

13. Radschützer nach einem der Ansprüche 10 bis 12, **dadurch gekennzeichnet, dass** jedes der Spreizelemente (13, 14) mindestens eine konische Fläche (33, 34) aufweist.

14. Radschützer nach einem der Ansprüche 1 bis 13, **dadurch gekennzeichnet, dass** das Befestigungselement als Schraube (15) ausgebildet ist.

15. Radschützer nach Anspruch 14, **dadurch gekennzeichnet, dass** die Schraube (15) in Verbindung mit einer Mutter das Ineinander-Drücken der Spreizelemente (13, 14) bewirken kann.
